# EUROPEAN PATENT APPLICATION

(11) **EP 4 790 546 A1**
(43) Date of publication of application: **12.08.2026**
(21) Application number: 26151530.8
(22) Date of filing: 13.01.2026
(51) Int. Cl.: G06F 8/30, G06F 8/35, G06F 8/36, G06N 20/00, G06F 8/10

(54) **METHOD AND SYSTEM FOR SOFTWARE DEVELOPMENT LIFECYCLE**

(30) Priority: 10.02.2025 US 202519049133
(71) Applicant: Accenture Global Solutions Limited, Dublin 4 (IE)
(72) Inventor: VIJAYARAGHAVAN, Koushik M, 600130 Chennai (IN); HEGDE, Vijeth Srinivas, 560076 Bangalore (IN); NAGARAJAN, Rajesh, 600100 Chennai (IN); SRIDEVI, Jayashri, 600014 Chennai (IN); MEHARWADE, Raghavendra, 560070 Bangalore (IN); VENKATANAGAPOORNA BONTHA, Pratap, 500089 Telangana (IN); MANJUNATH, Roopalaxmi, 560076 Bangalore (IN); RAYBARMAN, Dipankar, Tarneit, 3029 (AU); SRINIVASAN, Sudha, 560094 Bangalore (IN); MARWAHA, Ruchi, 560108 Bangalore (IN); TIWARY, Binod Kumar, 201310 Greater Noida (IN); AVARUMAN MOHAMMED, Khaja Kamal, 560084 Bangalore (IN); MANNARI, Badarinarayan, 560061 Bengaluru (IN); KRISHNAN K, Sivarama, 600129 Chennai (IN); ANANTHARAMAN, Rama, 560054 Bangalore (IN); GUPTA, Anubhav, 411028 Pune (IN)
(74) Representative: Müller-Boré & Partner Patentanwälte PartG mbB

(57) **Abstract**

A method for generating one or more artifacts, including the machine-executable code, in the software development lifecycle is disclosed. The method includes receiving a first set of inputs corresponding to a configurable feature. A prompt and, thereafter, a story, for the configurable feature is generated. Followed by a second set of inputs for generating a particular architecture is received. Further, a plurality of templates is loaded and based upon the loaded plurality of templates, the low-level design specification for the components or modules of the architecture is generated. Based upon the story for the feature, the architecture, and the low-level design specification, a machine-executable code is generated. Consequently, the machine-executable code is transmitted to an integrated development environment (IDE).

## Description

### TECHNICAL FIELD

Various examples described herein relate generally to software development lifecycle. Specifically, disclosed examples are directed to a method and a system for generating one or more artifacts in the software development lifecycle.

### BACKGROUND

The software development lifecycle (SDLC) is a structured approach to design, develop, deploy, and maintain software applications. The SDLC encompasses various phases, including requirement gathering, design, implementation, testing, deployment, and maintenance. Artificial intelligence (AI) and machine learning (ML) techniques are increasingly being integrated into the SDLC to automate and optimize said phases.

Generative artificial intelligence (gen AI) and ML are emerging as a powerful tool to revolutionize software development. By leveraging advanced techniques and large datasets, generative AI can automate tasks, such as code generation, test case creation, and documentation generation. Additionally, AI-powered tools can analyze code for potential vulnerabilities, optimize performance, and predict potential issues during the SDLC.

### SUMMARY

Implementations of the present disclosure are generally directed to software development lifecycle. More particularly, implementations of the present disclosure are directed to methods and systems for generating one or more artifacts in the software development lifecycle using generative artificial intelligence (Gen AI) and machine learning (ML) techniques.

In general, innovative aspects of the subject matter described herein provide a method and a system for software development lifecycle. The method may include receiving a first set of inputs corresponding to a configurable feature of a plurality of configurable features, through a graphical user interface (GUI). Further, the method may include generating, based upon the first set of inputs, a prompt for the feature. The method may further include generating, using a large language model and based upon the prompt, a story for the configurable feature. Moreover, the method may include receiving, through the GUI, a second set of inputs for generating an architecture of a plurality of architectures, wherein the story of the configurable feature describes specifications of the configurable feature, and wherein the architecture corresponds with an environment in which the configurable feature is executed. Furthermore, the method may include, loading a plurality of templates, each template of the plurality of templates associated with generating a low-level design specification for one or more components or modules of the architecture. The method may further include generating, based upon the loaded plurality of templates, the low-level design specification for the one or more components or modules of the architecture. Additionally, the method may include, generating, based upon the story for the configurable feature, the architecture, and the low-level design specification for the one or more components or modules, a machine-executable code for the one or more components or modules of the architecture. The method may further include transmitting the machine-executable code to an integrated development environment (IDE).

The present disclosure further describes a system for implementing the method provided herein. The present disclosure also describes non-transitory computer-readable media (CRM) coupled to one or more processors and having instructions stored thereon which, when executed by the one or more processors, cause the one or more processors to perform operations in accordance with the method described herein.

It is appreciated that methods in accordance with the present disclosure can include any combination of the aspects and features described herein. That is, the method in accordance with the present disclosure is not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

Various examples in accordance with the present disclosure will be described with reference to the drawings, in which:
FIG. 1 illustrates an example environment that may be used to execute implementations of the present disclosure.
FIG. 2 illustrates an architecture of an example system implementing software development lifecycle, in accordance with implementations of the present disclosure.
FIG. 3 illustrates an example block diagram representation of implementing brownfield code generation, by a code generator, in accordance with implementations of the present disclosure.
FIG. 4 illustrates an example block diagram representation of implementing greenfield code generation, by the code generator, in accordance with implementations of the present disclosure.
FIG. 5 illustrates an example block diagram representation of implementation of a composed syntax graphs technique, in accordance with implementations of the present disclosure.
FIG. 6 illustrates an example block diagram representation of implementation of a user interface (UI) linting technique, in accordance with implementations of the present disclosure.
FIG. 7 illustrates a flow diagram of an example method implemented by the system described herein, in accordance with implementations of the present disclosure.
FIG. 8 illustrates an example computer system used to implement the system for generating one or more artifacts in the software development lifecycle, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" (e.g., "for example", "an example of", "by way of example", or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring details of the examples.

The specification and drawings are to be regarded in an illustrative rather than a restrictive sense. It will, however, be evident that various modifications and changes may be made thereunto without departing from the broader spirit and scope of the invention as set forth in the claims.

Conventional methods for generating artifacts in software development lifecycle (SDLC) often focus primarily on code generation. Conventionally, separate tools like Copilot and Tabnine (that is an AI coding assistance) are utilized for code generation. Furthermore, conventional methods focus on isolated aspects of SDLC. The traditional methods assist in specific tasks like story generation or code recommendation of the SDLC activities that are generally manual and time-consuming. While some automation tools exist, but the known automation tools often address only a limited subset of the process tasks.

In view of this, in the present disclosure, a method and a system for generating artifacts in the SDLC, to overcome above mentioned drawbacks of the conventional methods, are described. The present disclosure takes a holistic approach, encompassing entire software development lifecycle (SDLC). By leveraging generative AI, the present disclosure aims to accelerate various stages of the SDLC, from requirements gathering to deployment. The present disclosure offers a comprehensive approach that encompasses all stages of the SDLC. The present disclosure, however, offers a comprehensive solution that automates a significant portion of the SDLC, leading to accelerated time-to-market.

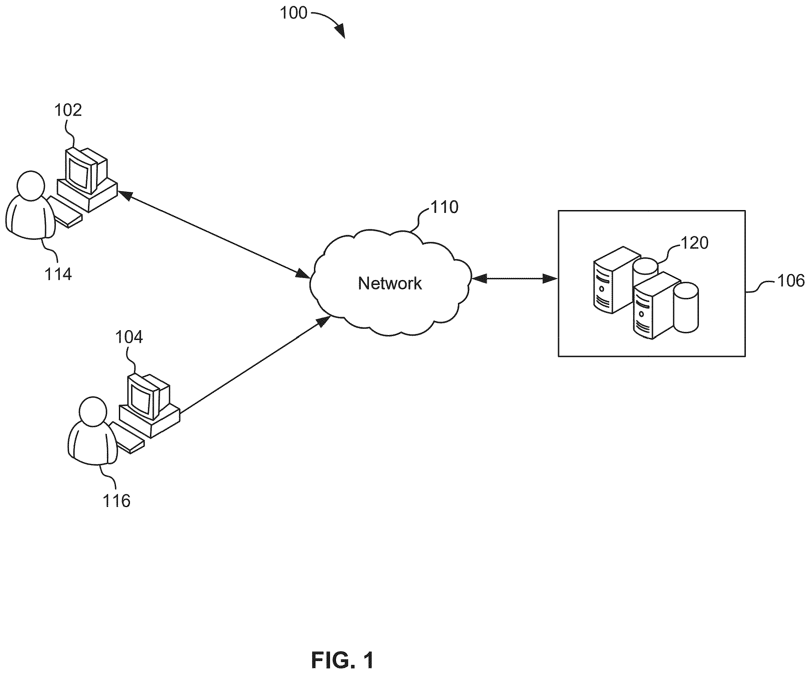

FIG. 1 depicts an example environment 100 that can be used to execute implementations of the present disclosure. In some examples, the example environment 100 enables users associated with respective systems to execute requests to generate content by invoking a trained language model in accordance with implementations of the present disclosure. The example environment 100 includes computing devices 102 and 104, a back-end system 106, and a network 110. In some examples, the computing devices 102 and 104 are used by respective users 114 and 116 to log into and interact with the back-end system 106 and applications executing on the back-end system 106 according to implementations of the present disclosure.

As shown in FIG. 1, the computing devices 102 and 104 are depicted as desktop computing devices. It is contemplated, however, that implementations of the present disclosure can be realized with any appropriate type of computing device (e.g., smartphone, tablet, laptop computer, voice-enabled devices). In some examples, the network 110 includes a local area network (LAN), wide area network (WAN), the Internet, or a combination thereof, and connects web sites (e.g., web applications executing on the back-end system 106), user devices (e.g., the computing devices 102, 104), and the back-end system 106. In some examples, the network 110 can be accessed over a wired and/or a wireless communications link. For example, mobile computing devices, such as smartphones can utilize a cellular network to access the network 110.

While only one back-end system 106 is shown in FIG. 1, there may be more than one back-end system 106, and each of the back-end systems 106 includes at least one server system 120. In some examples, the at least one server system 120 hosts one or more computer implemented services that users can interact with by using the computing devices 102 and/or 104. For example, components of enterprise systems and applications can be hosted on one or more of the back-end systems 106. In some examples, the back-end system 106 can be provided as an on-premises system that is operated by an enterprise or a third-party taking part in cross-platform interactions and data management. In some examples, the back-end system 106 can be provided as an off-premises system (e.g., cloud or on-demand) that is operated by an enterprise or a third-party on behalf of an enterprise.

In some examples, the computing devices 102 and 104 each include computer executable applications executed thereon. In some examples, the computing devices 102 and 104 each include a web browser application executed thereon, which can be used to display one or more web pages of applications executing on the back-end system 106. In some examples, each of the computing devices 102 and 104 can display one or more GUIs that enable the respective users 114 and 116 to interact with the back-end system 106. In accordance with implementations of the present disclosure, the back-end system 106 may host enterprise applications or systems that require data sharing and data privacy. In some examples, the computing device 102 and/or the computing device 104 can communicate with the back-end systems 106 over the network 110.

In some implementations, at least one of the back-end systems 106 can be implemented in a cloud environment. The back-end systems 106 includes at least one server system (or server) 120. In the example of FIG. 1, the back-end system 106 can include various forms of servers including, but not limited to, a web server, an application server, a proxy server, a network server, and/or a server pool. In general, server systems accept requests for application services and provide such services to any number of client devices (for example, the computing device 102 over the network 110).

In some implementations, the back-end system 106 can be used to generate one or more artifacts in the SDLC. The non-limiting examples of the artifacts may include design documents, architecture (depicting workflow diagram or the like), source code (including programming languages, libraries, frameworks, or the like), stories and test cases.

Various examples, depicting generating one or more artifacts in the SDLC, are described in detail in conjunctions with figures below.

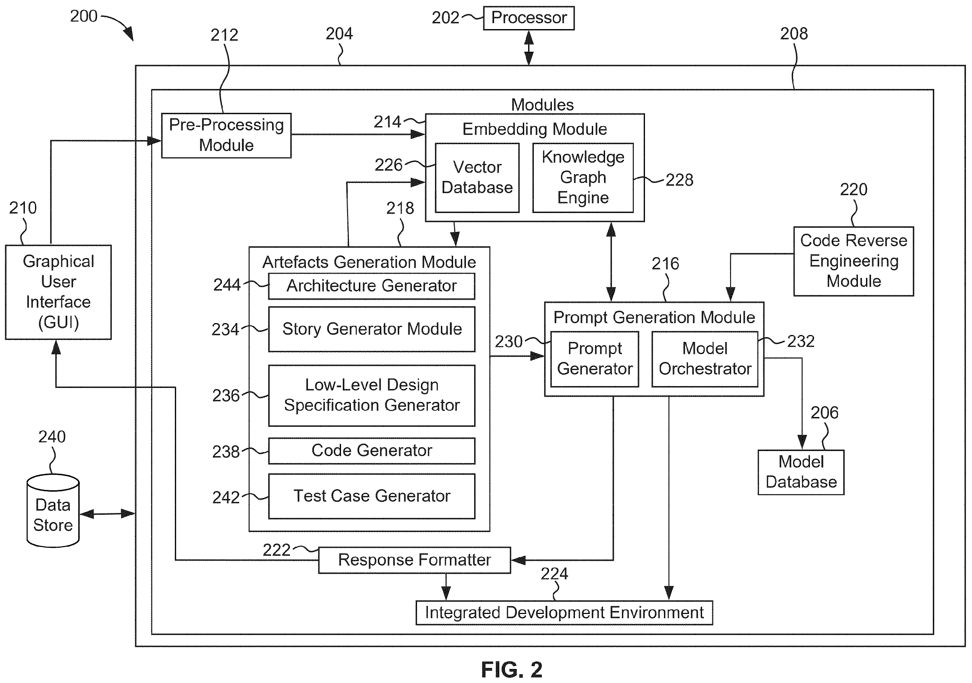

FIG. 2 illustrates an architecture 200 of the back-end system 106 implementing the software development lifecycle, in accordance with implementations of the present disclosure. The system 106 may include one or more memories 204 storing machine executable instructions, one or more processors 202 and a graphical user interface (GUI) 210. The one or more processors 202 may be communicably coupled with the memory 204 and configured to execute the machine executable instructions. In some examples, the one or more processors 202 may include, but not limited to, microprocessors, microcomputers, hardware processors, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the one or more processors 202 may be programmed to cooperate with non-transitory computer-readable instructions stored in the memory 204 (also referred to be as computer-readable medium) for performing operations according to the present disclosure. The memory 204 may be non-transitory or non-volatile medium, such as a magnetic disk or solid-state non-volatile memory or volatile medium such as Random Access Memory (RAM), and/or the like.

In some examples, the memory 204 may include the plurality of modules 208 in the form of programmable instructions executable by the one or more processors 202. The modules 208 may further include a pre-processing module 212, an embedding module 214, a prompt generation module 216, an artifacts generation module 218, a code reverse engineering module 220, a response formatting module (also referenced herein as a response formatter) 222 and integrated development environment 224 and a model database 206. The model database 206 may include one or more Large Language Models (LLMs) (also be referenced herein as Generative Artificial Intelligence (GAI)) models, foundation models, and/or the like). In an implementation, the LLMs may include pre-trained LLMs or generated LLMs. The pre-trained LLMs may be general-purpose GAI models like large deep learning neural networks, which may be trained using a broad range of generalized and unlabeled training data to perform one or more tasks, such as, human computer interactions (i.e., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models.

In some examples, the back-end system 106 may receive a first set of inputs through the GUI 210. The first set of inputs corresponds with a configurable feature of a plurality of configurable features. By way of an example, the plurality of configurable features may include one or more functional features and/or one or more nonfunctional features. The functional feature may describe how a specific configurable feature works and the nonfunctional feature may describe a user experience associated with the specific configurable feature. Once the input corresponding to functional/nonfunctional features is received, a configurable feature of the plurality of configurable features may be selected. Specifically, said corresponding features may be selected based on the specification given in the input requirement and with the features available in RAG. The plurality of configurable features may include, but not limited to, a user registration feature, a product catalog feature, a shopping cart feature, a payment gateway feature, an order management feature, a security feature, a performance feature, a scalability feature, an accessibility feature, and/ or a user interface feature. In an example, the input corresponding to user registration feature may be "Create a user registration feature with email and password authentication", "Enable two-factor authentication (2FA) for enhanced security during registration", or the like. The input corresponding to the order management feature may be "Build a product catalog with filtering and sorting options (e.g., price, category, brand)", "Display product images and detailed descriptions with rich media (e.g., videos, 360-degree views)", or the like. The input corresponding to the security feature may include "Implement access control mechanisms to restrict unauthorized access". The input corresponding to the performance feature may include "Conduct load testing to ensure the system can handle high traffic". The input corresponding to the scalability feature may include "Utilize cloud infrastructure for scalability and flexibility". The input corresponding to the accessibility feature may include "Ensure compliance with accessibility standards (e.g., WCAG)". The input corresponding to the user interface feature may include "Implement a consistent visual style throughout the website".

Specifically, the back-end system 106 may receive the first set of inputs that specify the desired configuration for one or more of said configurable features. The back-end system 106 may interpret the first set of inputs and configure accordingly. The back-end system's 106 ability to accept diverse inputs and configure features may provide a high degree of flexibility and customization. The back-end system 106 may be adapted to specific needs and preferences for a more personalized and efficient user experience.

The pre-processing module 212 may process the input received via the GUI 210 to extract relevant information and identify the feature to be implemented. In an example, the pre-processing module 212 may utilize techniques like, but not limited to, handling missing values, outlier detection and handling, noise reduction, data integration, data transformation, data reduction and data encoding. Specifically, the pre-processing module 212 may perform the initial cleaning, transformation, and preparation of the received input for subsequent processing.

Further, the pre-processing module 212 may transmit the pre-processed data (herein, the pre-processed data may be the first set of inputs processed by the pre-processing module 212) to the embedding module 214. The embedding module 214 may further include a vector database 226 and a knowledge graph engine 228. The embedding module 214 may transform the received data from the pre-processing module 212, into vectors and store said vectors in the vector database 226. The vectors may enable faster searching where the search compares vectors rather than characters. In other words, the vector database 226 may store the vector representation of the data processed by the pre-processing module 212 (for example code, natural language, or the like). The vector database 226 may capture semantic and syntactic similarities between different aspects of information in the data. When a user provides the input or a query, the embedding module 214 may convert the input (after pre-processing by the pre-processing module 212) into the vectors and store the vectors in the vector database 226. The vector database 226 may perform similarity search (for example, cosine-similarity) to retrieve the most relevant code snippets, natural language descriptions, or other data. In essence, by leveraging vector similarity, the embedding module 214 may determine context of the input and provide accurate and appropriate suggestions. Additionally, the knowledge graph engine 228 may determine the relationships between different entities, such as code components, APIs, and data flows. Specifically, the knowledge graph engine 228 may store and manage data in a graph-like structure, and further, may be used to model and reason entities and their interconnections. In an example, the knowledge graph engine 228 may analyze source code and identify dependencies between different code components (for example, classes, functions, modules, or the like). The knowledge graph engine 228 may also extract information about APIs used, data structures employed, and relevant code-level details. Moreover, the knowledge graph engine 228 may, using natural language processing (NLP) techniques, analyze text data (e.g., code comments, documentation, emails) to infer relationships between entities. For example, if a code comment mentions that a specific function interacts with a particular API, the knowledge graph engine 228 may infer relationship between the function and the API. Further, the knowledge graph engine 228 may identify recurring patterns in code and data usage to infer relationships. For example, if multiple components frequently access the same data source, the knowledge graph engine 228 may infer dependency between said components and the data source. Furthermore, the knowledge graph engine 228 may apply predefined rules to infer relationships. For example, if a component uses a specific library, the knowledge graph engine 228 may infer dependency between the component and the library. By capturing said relationships, the knowledge graph engine 228 may provide a comprehensive view of the system's 106 architecture and dependencies.

Furthermore, the prompt generation module 216 may generate a prompt for the configurable feature, based upon the first set of inputs. The prompt generation module 216 may further include a prompt generator 230 and a model orchestrator 232. Specifically, the prompt generator 230 may generate the prompt using the first set of inputs, vectors stored in the vector database 226 and knowledge graph stored in knowledge graph engine 228. Specifically, the prompt generator 230 may analyze the first set of inputs to determine the desired outcome or functionality followed by identifying and extracting relevant keywords, concepts, and constraints from the first set of inputs. Thereafter, the vector database 226 may be queried to retrieve similar code snippets, documentation, or other relevant information. By leveraging vector similarity search, the existing code may be identified that addresses similar functionalities or requirements. Additionally, the knowledge graph engine 228 may be queried to retrieve information about related entities, their relationships, and their attributes. The prompt generator 230 may combine the processed user input, the retrieved information from the vector database 226, and the knowledge graph engine 228 to generate prompt for the LLM. The generated prompt may include task specification, contextual information, constraints, and requirements. Herein, the task specification may define desired output, such as generating code, translating text, or writing creative content. The contextual information may provide relevant background information, such as code snippets, API documentation, or domain-specific knowledge. The constraints and requirements may specify limitations or specific guidelines for the generated output.

Additionally, the model orchestrator 232 may be provided for selecting and executing the appropriate model for a given task. The model orchestrator 232 may analyze the generated prompt and identify the most suitable model from the model database 206, thereby, optimizing performance and resource utilization. Different models may excel in specific tasks, such as text generation, translation, or code completion. The model orchestrator 232 may select the most suitable model based on the specific requirements of the input or user query. The selection of the most suitable model may be based on factors such as, but not limited to, model capabilities, resource constraints and performance metrics. Specifically, said most suitable model may be selected based on the type of use case and expected output. The model orchestrator 232 may be trained with knowledge about the different models and their specializations. Once the most suitable model is selected, the model orchestrator 232 may send the generated prompt to the model for execution. In an example, the prompt generated is "write a Python function to sort a list of numbers using the bubble sort algorithm". The model orchestrator 232 may analyze the prompt and determine that the task requires code generation. Thereafter, the model orchestrator 232 may consider models known for their code generation capabilities and select the model that is most likely to generate high-quality, accurate python code while considering resource constraints and cost.

Further, the artefacts generation module 218 may generate artefacts based on the generated prompt and selected model. Herein, the artefacts may include, but not limited to, story, low-level design specifications, architecture, code, and test case. The artefacts generation module 218 may include an architecture generator 244, s story generator module 234, a Low-Level design specification generator 236, a code generator 238, and a test case generator 242.

The story generator module 234 may generate a story for the configurable feature using a large language model (LLM) (selected by the model orchestrator 232 from the model database 206) and based upon the prompt. Generating the story for the configurable feature may further include generating a plurality of prompts and linking each prompt to generate the story for the feature using the large language model. Specifically, the prompt generation module 216 may generate multiple prompts, each focusing on the specific aspect of the configurable feature, such as functional requirements, non-functional requirements, user interface, or security considerations. For each prompt, the LLM may be used to generate a corresponding narrative, providing a detailed description of the configurable feature's behavior, constraints, and desired outcomes. The generated narratives may be linked together to form the user story for the entire feature, ensuring consistency and completeness. Once the initial user story is generated, the user may further refine and customize said user story to meet specific requirements. For instance, the user may select specific functional or non-functional areas of the story that require more detailed elaboration. The user may repeat this process for different features, gradually building a comprehensive set of user stories that align with the desired outcome.

Further, the back-end system 106 may receive a second set of inputs, through the GUI 210, for generating an architecture of a plurality of architectures. Specifically, the architecture generator 244 may generate said architecture in accordance with the second set of inputs. The story may describe specifications of the configurable feature, and the architecture may correspond with an environment in which the configurable feature is executed. Herein, the plurality of architectures may include a functional architecture, an application architecture, and/or a technical architecture. Moreover, the second set of inputs may include a hosting model, a cloud provider, and/or an architecture pattern. Specifically, the user may provide additional input or the second set of inputs through the GUI 210 to specify the desired architecture, which may be tailored to a specific execution environment. The generated story may provide information about the configurable feature's requirements, which influences the generation of the architecture. The functional architecture may define the high-level functions of the system 106 and their relationships. The application architecture may define the software components and their interactions. The technical architecture may define the underlying infrastructure, hardware, software platforms and the like. In an aspect, the back-end system 106 may receive through the GUI 210, feedback to the story, and updating the story based upon the feedback.

Furthermore, a plurality of templates may be loaded into the back-end system 106's artefact generation module 218. Each template of the plurality of templates may be associated with generating a low-level design specification for components or modules of the architecture. The low-level design specification may include a detailed technical document outlining the implementation details of components or modules of the architecture. The low-level design specification may, further, provides a blueprint for developers, detailing the data structures, algorithms, interfaces, and other technical aspects of the architecture. The low-level design specification may ensure that the architecture is built in a consistent and efficient manner, adhering to specific requirements and standards. By providing a precise technical blueprint, the low-level design specification may enable effective communication between development teams and facilitates code reviews, testing, and maintenance. The system 106 may maintain a template library (not shown in FIG. 2) of pre-defined templates, each tailored to specific architecture, technologies, or industry standards. Based upon the loaded plurality of templates, the low-level design specification generator 236 may generate said low-level design specification. Additionally, the generated low-level design specification may be modified by the user to meet specific/desired requirements.

In further detail, based upon the story for the feature, the architecture, and the low-level design specification, the code generator 238 may generate a machine-executable code for the components or modules of the particular architecture. The machine-executable code may interchangeably be referred to as code. The code generator 238 may utilize a retrieval-augmented generation (RAG) for generating the code. Specifically, RAG may analyze the input and retrieve a set of relevant/supporting documents from a data store 240. The documents may be concatenated as context with the prompt generated by the prompt generation module 216 and fed to the artifacts generation module 218 to produce the final output. In an aspect, multiple level RAG module(s) may be used to generate code. The documents (for example client coding standards, packages, UI libraries, boilerplates, or the like) may be retrieved and used with LLMs (selected from the model database 206) to generate relevant content or code. In other words, the code generator 238 may analyze (using RAG) the input (story, architecture, or low-level design specification) to determine the context and identify relevant keywords. Based on these keywords, the data store 240 may queried to retrieve relevant documents. Moreover, the machine-executable code may be generated by using a screen user interface mockup (not shown in FIG. 2). The screen user interface mockup may refer to visual representation of generated code on GUI 210. The screen user interface mockup may provide a preliminary design or layout of how the generated machine-executable code may look and function. The screen user interface mockup may be used as a starting point for users to further refine the design, or generating the desired code, accelerating the development process.

Moreover, a set of test cases for the story of the feature may be generated by the test case generator 242. The test cases may verify correct functionality and performance of the generated code or application. The test case generator 242 may generate various types of test cases, including, but not limited to, functional tests, non-functional tests, regression tests and performance tests. Specifically, the functional tests may verify that the generated code or application performs intended functions. The non-functional tests may evaluate aspects for example performance, security, and usability. The regression tests may ensure that new changes to the system do not negatively impact existing functionality. The performance tests may measure the performance under various load conditions. Additionally, the test case generator 242 may generate automated test scripts, such as Selenium or Cypress scripts, based on the generated test cases. The test scripts may be executed to automate the testing process, reducing manual effort, and increasing efficiency. To effectively execute the test cases, the test case generator 242 can also generate test data. The test data may simulate real-world scenarios and test the system's behavior under different conditions. In essence, by automating test case generation and script creation, the back-end system 106 helps development teams ensure the quality and reliability of the application of software.

Furthermore, the response formatter 222 may format and structure the machine-executable code compatible with integrated development environment (IDE) 224. For instance, the response formatter 222 may apply specific formatting styles, such as spacing, line breaks, and alignment, to improve the overall appearance and readability of the code. The response formatter 222 may convert the LLM output into a user consumable format. For example, if the model output is an architecture, the response formatter 222 may covert said architecture into draw.io compatible scripts. Similarly, if the response is code, then the output may be converted into code structures suitable for selected programming language.

Thereafter, the machine-executable code may be transmitted to the IDE 224. In the IDE 224, user may enhance the generated code. Further, in IDE 224, unit test generation may be performed ensuring the correctness and quality of the generated code. Specifically, in the IDE 224 basic unit test may be generated based on the said test cases generated by the test case generator 242. By automatically generating unit tests based on the code structure and specifications of the test cases generated by the test case generator 242, users may identify and fix potential issues, along with and providing feedback on test results. Additionally, the IDE 224 may include CI/CD (continuous integration and continuous delivery) pipelines, allowing for rapid deployment and testing of the generated code. The integration eliminates manual steps and significantly reduces the time required to deploy new features or bug fixes. The live integration may enable the continuous monitoring and remediation of issues, ensuring the back-end system's 106 reliability and performance.

In an aspect, the code generator 238 may implement brownfield code generation and greenfield code generation, for generating the code. The brownfield code generation may leverage existing codebases as a foundation. For implementing the brownfield code generation, the code generator 238 may analyze the existing code, identify relevant patterns and components, and generate new code that seamlessly integrates with the existing system. The brownfield code generation may be particularly useful for extending or modifying existing applications. Further, in the greenfield code generation, code is generated from scratch. For implementing the greenfield code generation, the code generator 238 may utilize user input (the first set of inputs), architectural constraints, and domain knowledge to generate new code that meets specific requirements. The greenfield code generation may be is suitable for developing new applications or components. Thus, by implementing both brownfield and greenfield code generation capabilities, the code generator 238 may provide a flexible and adaptable solution for various development scenarios.

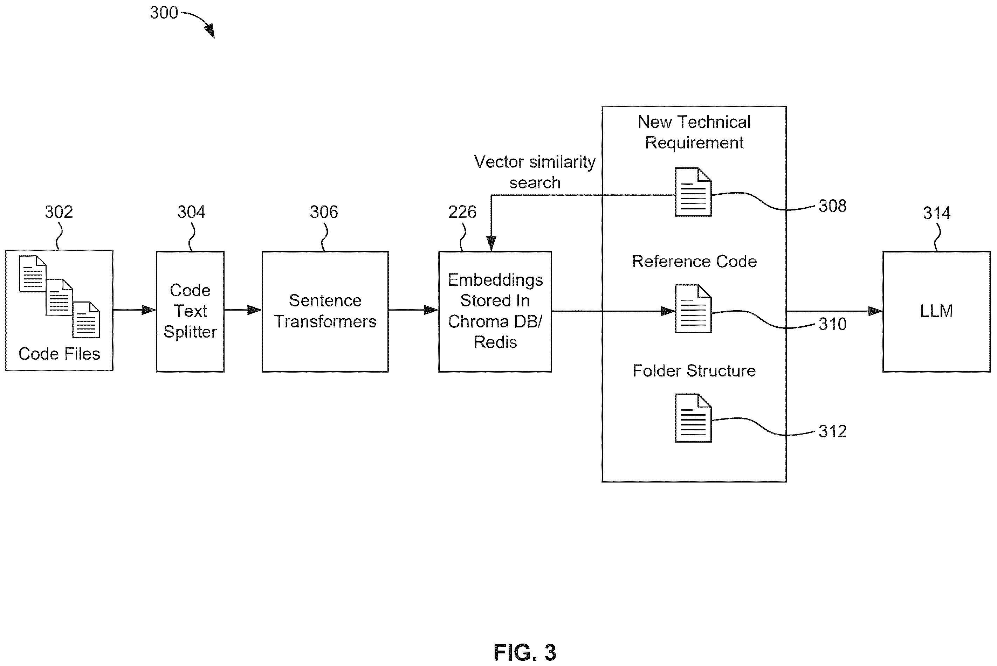

FIG. 3 illustrates a block diagram representation 300 of implementing the brownfield code generation, by the code generator 238, in accordance with implementations of the present disclosure. Existing code files 302 may be analyzed and processed by the code generator 238. Specifically, the code generator 238 may further include a code text splitter 304 and a sentence transformer 306. The code text splitter 304 may break down the code (in the code files 302) into smaller, manageable chunks. The code text splitter 304 may support multiple programming languages for example cpp, go, java, kotlin, js, ts, php, proto, python, rst, ruby, rust, scala, swift, markdown, latex, html, sol, csharp, cobol, and the like. Thereafter, the sentence transformer 306 may process the chunks to generate vector representations (embeddings) that capture the semantic meaning and relationships within the code. The embeddings may be stored in the vector database 226 (for example, ChromaDB and Redis) for further processing including retrieval and similarity search. When a new technical requirement 308 or feature is introduced, the code generator 238 may generate embedding for this new requirement. The code generator 238 may perform vector similarity search is on the stored embeddings in the vector database 226 to identify the most relevant existing code snippets. The most relevant existing code snippets may be retrieved as reference code 310. The reference code 310 may provide insights into how similar functionalities have been implemented, coding styles, and best practices within the organization. Additionally, based on the analysis of code files 302 and the new technical requirement 308, a folder structure 312 may be generated. The folder structure 312 may refer to the hierarchical organization of code files 302 and directories, thereby, maintaining code organization, readability, and maintainability. The retrieved reference code 310, along with the new technical requirement 308, folder structure 312 may input as contextual inputs for the large language model (LLM) 314. The LLM 314 may generate an initial code plan or outline. The initial code plan may include basic implementations for different components within the specified folder structure 312. The initial code plan, further, identify the overall structure and components of the new code. For example, the LLM 314 may generate the below initial code plan, identifying the structure of the code, including the components (component 1, component 2 and component 3) and their organization into folders (folder 1, folder 2 and folder 3). Along with the folder structure 312, the LLM 314 may generates basic code implementations for each of these components:
Folder 1: Component 1 (Basic Code)
Folder 2: Component 2 (Basic Code)
Folder 3: Component 3 (Basic Code)

Moreover, the LLM 314 may generate more detailed and complete code implementations for each identified component, based on the initial code plan. The LLM 314 may refine and expand the basic code generated by the LLM 314. Specifically, the LLM 314 may implementing additional features and functionalities not initially included in the basic code. The LLM 314 may organize the refined code into the respective folders and components, maintaining the structure defined in the initial code plan, thereby, ensuring the generated code is well-structured and easy to navigate. In an example, the LLM 314 may utilize framework (such as Python) for handling prompts, additional contextual inputs, and post-processing tasks.

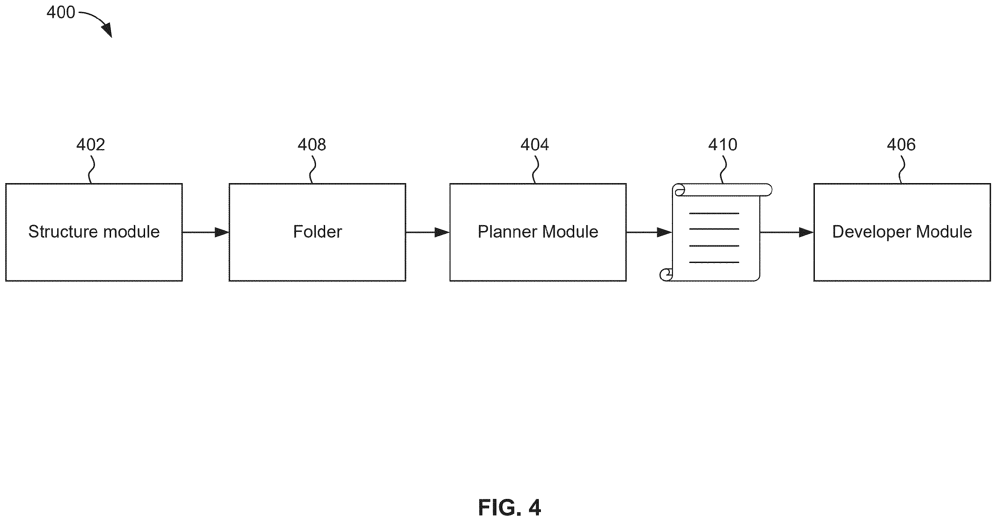

FIG. 4 illustrates a block diagram representation 400 of implementing the greenfield code generation, by the code generator 238, in accordance with implementations of the present disclosure. The code generator 238 may further include a structure module 402, a planner module 404 and a developer module 406. The structure module 402 may capture the user's requirements in a structured format. Specifically, the structure module 402 may generate templated summary of the user's requirements. Herein, the templated summary may refer to a structured representation of the user's requirements for the application. the templated summary may include, but not limited to, objectives and desired outcomes of the application, functional and non-functional requirements and any limitations or restrictions. Thus, the templated summary may provide standard format for capturing user's requirements, ensuring consistency and completeness. Based on the templated summary, the structure module 402 may generates a folder 408 for the application. The folder 408 may define how the code will be organized, including the creation of directories and files. Additionally, the generated folder 408 may be presented to the user for review and approval. Thus, the user may provide feedback and make necessary adjustments. Thereafter, the templated summary and the folder 408 may be received by the planner module 404 as input. The planner module 404 may process the received input and generate a comprehensive plan 410 for the code. The comprehensive plan 410 may include, but not limited to, file details, component definitions and application programming interface (API) definitions. Herein, the file details may include information about each file, including objective, dependencies, and associations with other files. The component definitions may include descriptions of the different components and their interactions. The API definition may include specifications for APIs that the application may use or expose. Furthermore, the planner module 404 may utilize chain of thoughts and reflection techniques to refine the comprehensive plan 410 for the code and enhance the quality. Specifically, by utilizing the chain of thoughts technique, the planner module 404 may break down large, complex requirements into smaller, more manageable sub-tasks. After that, a sequence of steps may be generated such as designing a specific algorithm, implementing a particular feature or the like. Moreover, by utilizing the reflection technique the planner module 404 may analyze the generated comprehensive plan 410 and identify potential inconsistencies, or missing elements. The planner module 404 may iteratively refine the comprehensive plan 410 based on self-critique, improving the quality and completeness. Additionally, the planner module 404 may generate explanations for the generated comprehensive plan 410 for the code, thereby, enabling the user to understand and debug the generated plan.

Further, the developer module 406 receive the comprehensive plan 410 for the code generated by the planner module 404 and implement detailed code for each file. The developer module 406 may implement the detailed code based on factors such as, coding standards, green coding practices and exception handling. The developer module 406 may communicate with the planner module 404 and the user to ensure the generated coding meets the specified requirements. The user may review and approve the templated summary, folder 408, and the comprehensive plan 410 generated by the planner module 404. The iterative process may ensure that the generated code aligns with the user's requirement.

In further detail, the developer module 406 may facilitate the transformation of the user's requirements into code by a series of techniques. The techniques may include agentic workflows, composed syntax graphs and user interface (UI) linting. Specifically, the agentic workflow may break down user's requirements into smaller, more manageable tasks. Moreover, the agentic workflow technique may perform parallel processing and enables the back-end system 106 to process intricate requirements efficiently. Each task may be assigned to a dedicated agent. The dedicated agent may specialize in a particular aspect of code generation, such as data modeling, API integration, or user interface design. Furthermore, the composed syntax graphs may provide a structural framework for ingesting and processing existing code. By analyzing the syntax and relationships within the code, the back-end system 106 may process the existing code and generate new code, seamlessly integrating with the existing code. The composed syntax graphs may be particularly utilized in the brownfield code generation. Further, the UI linting may generated user interface elements adhered to specific design principles and best practices. UI linting may create a visually cohesive and user-friendly interface by checking for inconsistencies, identifying potential usability issues, and suggesting improvements.

Moreover, an orchestrator (not shown in FIG. 4) may be provided, coordinating the different techniques implemented by the developer module 406 and ensuring seamless integration between the various code generation techniques. Specifically, based on the nature of the user's requirement and the available resources, the orchestrator selects the most suitable combination of, agentic workflows, composed syntax graphs, and UI linting techniques.

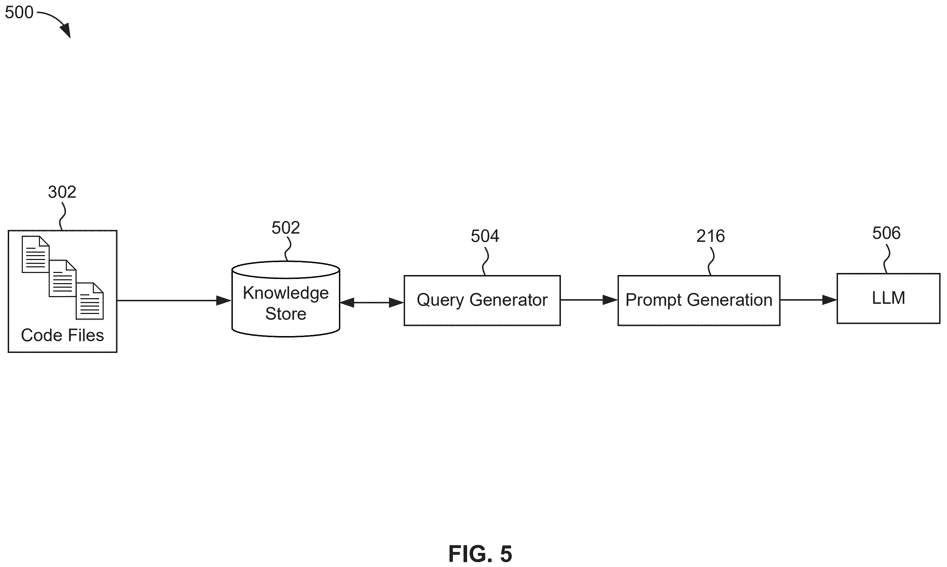

FIG. 5 illustrates a block diagram representation 500 of implementation of the composed syntax graphs technique, in accordance with implementations of the present disclosure. The composed syntax graphs technique may include extracting composed syntax graphs for retrieval augmented cross-lingual code generation. Specifically, the structural knowledge of codes may be incorporated into the large language models for processing of codes. By incorporating the structural knowledge of codes, the LLMs may extract the inherent semantic and logic flow of codes for higher quality generation and transfer knowledge across different programming languages, thereby enabling cross-lingual code generation. Herein, the composed syntax graphs may refer to a graph representation of the program obtained by merging the abstract syntax trees (AST), control-flow graphs (CFG) and program dependence graphs (PDG) at statement and predicate nodes. The AST may include the syntactic structure of the code, including the hierarchical relationships between tokens, expressions, and statements. The CFG may include the control flow of a program, representing the possible execution paths and the order in which statements are executed. The PDG may include the data dependencies between statements in a program, including data flow and control flow dependencies.

The obtained composed syntax graphs may serve as an underlying graph model of graph databases such as Neo4j, JanusGraph and OrientDB where data may be stored in the nodes and edges as key-value pairs. The composed syntax graphs may be stored in graph database. In the composed syntax graphs, nodes may represent program elements like statements, functions, or classes. The edges may represent relationships between nodes, such as control flow, data flow, or inheritance. The graph database may be queried using graph query languages, such as, cypher. In essence, composed syntax graphs may represent the code in a format that represents the inherent syntax of code and also bridges the gap between natural language and programming language to easily query the data.

In an example, the syntax and control information of code files 302 may be analyzed and transformed into the composed syntax graph based on the data-flow-graph and control-flow-graph. Thus, the semantic level and the logical level information of code files 302 may be extracted. transformation may be formulated as, ∀ci ∈ Dpool:
gi ←- GraphExtractor(ci),
KB.append((ci , gi)),
where ci is the raw code in the code files 302 and gi is the extracted graphical view of the corresponding code block. Furthermore, AI model such as, hybrid-graph neural network (GNN) and pretrained cross-lingual code search models may be utilized to measure the distances. The normalized attention coefficients for the AI model may expressed as: ${a}_{uv} = \frac{exp \left(LeakyReLU\left({a}^{T}\left[{Wh}_{u}\left‖{Wh}_{v}\right‖{e}_{uv}\right]\right)\right)}{{\sum }_{z ϵ Nu} exp \left(LeakyReLU\left({a}^{T}\left[{Wh}_{u}\left‖Wz\right‖{e}_{uz}\right]\right)\right)}$
wherein,
   a denotes vector of learnable weights;
   W denotes learnable weight matrix used for linear transformation of node features;
   h denotes the feature vector of node u in the graph;
   Wₕ denotes the transformed feature vector of node u after applying the weight matrix W;
   e denotes the edge feature between nodes u and v;
   [*Whᵤ*||*Whᵥ*||*eᵤᵥ*] denotes concatenation of the transformed features of nodes u and v, along with the edge feature; and
   LeakyReLU denotes modified ReLU activation function;

The transformed composed syntax graph may be stored in a knowledge store 502. The knowledge store 502 may preserve the semantic and logical information of code in the composed syntax graph. When a specific problem or task (for example, code generation, a data analysis task, or any other problem that requires knowledge and reasoning) arises, a query generator 504 may generate a query to determine the underlying meaning and context of the problem or task. Herein, the query generator 504 may utilize the encoder (for example, NL2Code model encoder) to identify relevant concepts and relationships in the identified task. The generated query may then search the knowledge store 502 and retrieve the relevant information. The process may be formulated as:
q ←- QueryExtractor(p),
i Top-1 ←--- Retriever(q, KB)
wherein,
   q denotes the query content;
p denotes the target problem; and
i denotes the returned index of the Top-1 relevant content stored in the knowledge store 502.

In further detail, the query generator 504 may generate the query, said query may include task description and function declaration. Specifically, the task description may specify the task to be completed by the target function code. The function declaration may provide the function name and the input variables. Before knowledge querying, the description of each task may be extracted to reduce the ambiguity and then concatenate it with the function declaration to generate the query, where the functionality and input format of the expected code are included.

The generated query from query generator 504 may query the knowledge store 502 for retrieving the relevant information. The retrieved information may be input to the prompt generation module 216. The generated prompt may cause LLM 506 to generate required code.

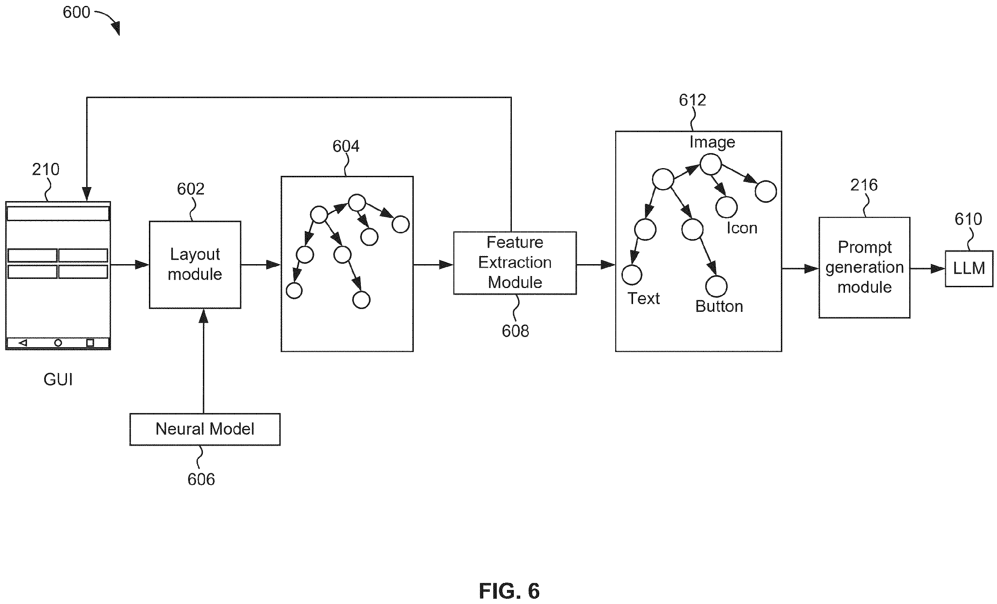

FIG. 6 illustrates a block diagram representation 600 of implementation of the UI linting technique, in accordance with implementations of the present disclosure. Herein, the UI linting may refer to analyzing and identifying potential issues or inconsistencies in a user interface design. The potential issues may include, but not limited to fragmentation, inconsistent layout, missing or incorrect elements, accessibility issues and performance issues. By detecting and correcting potential issues in the design prototypes, the back-end system 106 may generate accurate and reliable code, thereby, leading to an organized UI structure and improved code readability. In an example, the visual representation on the GUI 210 may be analyzed by a layout module 602 to generate a tree layout structure 604. The tree layout structure 604 may determine the hierarchical structure of the GUI 210 elements, where each node represents a specific element, such as image and/or text. Specifically, the layout module 602 may group the elements based on visual similarity and spatial proximity. The grouped elements may be organized into the hierarchical tree structure, representing the parent-child relationships between the elements. In an aspect, the layout module 602 may utilize a neural model 606 (for example graph neural network (GNN)) to determine the overlap between elements using metrics such as, intersection over union (IoU). If the IoU exceeds a threshold, the smaller element is considered a child of the larger one. Additionally, the layout module 602 may merge the fragmented elements into a single element based on their spatial coordinates.

Moreover, a feature extraction module 608 may analyzes the visual appearance (shape, color, texture) and spatial properties (position, size) of each element on the GUI 210. The feature extraction module 608 may, further, extract features from the visual representation of the element and assign specific element types to each element within the tree layout structure 604 (as shown in 612). Based on the extracted features, the elements may be classified into specific element types (for example, "image," "text," "button," "icon"). The feature extraction module 608 may utilize models such as ResNet-50, to extract features. By classifying the elements into specific element types, semantics of the code may be captured. Following this, the tree layout structure 612 with assigned element types may are provided as input to the prompt generation module 216. The prompt generation module 216 may generate prompt and instruct LLM 610 to generate code corresponding to the visual representation on the GUI 210. Moreover, the generated code may include HTML code and CSS code. The HTML code may include the basic structure of the HTML document, which defines the overall layout and the hierarchy of elements on the visual representation on the GUI 210. The HTML code may include tags (for example, <html>, <head>, and <body>), as well as the main content elements (for example, <div>, <p>, and <button>). Furthermore, the CSS code may include styling information, determining the visual appearance of the HTML code elements, including their colors, fonts, sizes, spacing, and layout. The HTML code elements may be defined using CSS properties and selectors. Specifically, the HTML code may capture the semantic context of the visual representation on the GUI 210 and the CSS code may capture the desired visual appearance.

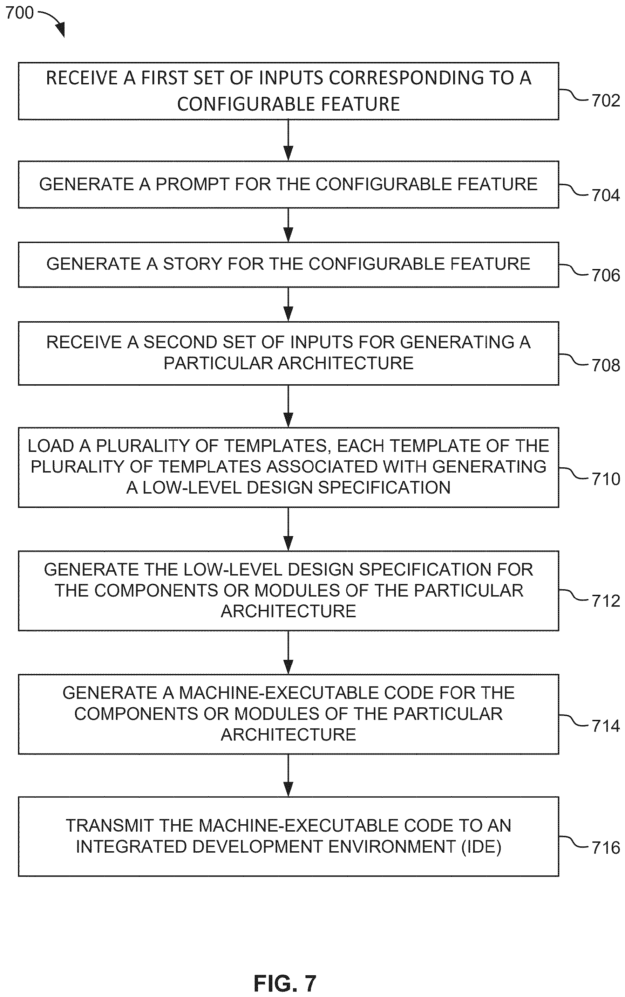

FIG. 7 illustrates the flow diagram of an example method 700 implemented by the back-end system 106, in accordance with implementations of the present disclosure.

The method 700 may include receiving 702 the first set of inputs corresponding to the configurable feature. Herein, the configurable features may include, but not limited to, a user registration feature, a product catalog feature, a shopping cart feature, a payment gateway feature, an order management feature, a security feature, a performance feature, a scalability feature, an accessibility feature, and/ or a user interface feature.

The method 700 may include generating 704, the prompt for the configurable feature. Specifically, the prompt may be generated based upon the first set of inputs.

The method 700 may include generating 706 the story for the configurable feature. Herein, the story may be generated using the large language model and based upon the prompt.

The method 700 may include receiving 708, through the GUI 210, the second set of inputs for generating a particular architecture of a plurality of architectures. Herein, the story of the feature may describe specifications of the configurable feature. Moreover, the architecture may correspond with an environment in which the configurable feature is executed.

The method 700 may include loading 710 a plurality of templates, each template may be associated with generating a low-level design specification for one or more components or modules of the architecture.

The method 700 may include generating 712, the low-level design specification for the one or more components or modules of the architecture. Specifically, the low-level design specification may be generated based upon the loaded plurality of templates.

The method 700 may include generating 714 a machine-executable code for the one or more components or modules of the architecture. Specifically, said machine-executable code may be generated based upon the story for the feature, the architecture, and the low-level design specification.

The method 700 may include transmitting 716 the machine-executable code to an integrated development environment (IDE) 224. In the IDE 224, the generated machine-executable code may be reviewed and inspected for further modifications or enhancements as per the requirements. Further, the machine-executable code may be built, tested, and deployed within the IDE's environment.

Implementations of the present disclosure provides technical solutions to multiple technical problems that arise in the context of generating one or more artifacts in the software development lifecycle. For example, in the present disclosure the system's 106 input mechanism may provide a flexible and intuitive interface for defining the desired system behavior and characteristics. By enabling users to select and configure specific features via GUI 210, the back-end system 106 can be customized to meet diverse requirements and use cases. This adaptability enhances the system's 106 versatility and applicability across various domains.

Moreover, by leveraging LLM-based techniques, the generation of artifacts may be automated, ensuring consistency, completeness, and accuracy. The AI techniques may enable rapid creation of artifacts, streamlining the software development lifecycle (SDLC). User-driven refinement further enhances the process, allowing for customization and tailoring the generated artifacts to specific project requirements. Furthermore, utilizing RAG allows language models to bypass retraining, enabling access to the latest information for generating reliable outputs via retrieval-based generation.

Each of the artifact generation has a series of prompts running in the prompt generation module 216 that execute to give the required output to the user. The present disclosure may provide flexibility to modify these prompts/ test and harvest them. This way prompts may be customized as per the requirements.

Further, in the present disclosure, the code generator 238 may leverages a diverse range of inputs to generate tailored code solutions. The inputs may encompass, user stories, existing code, and/or design prototypes. The code generator 238 may be capable of generating code aligning with both functional and non-functional requirements, ensuring the code is accurate, efficient, maintainable, and adheres to best practices.

Moreover, the LLM 314 may provide the initial code plan and basic implementations. By analysing the provided requirements and architectural constraints, the LLM 314 generates a high-level design, outlining the overall structure of the application and key components. This initial code plan acts may as a blueprint for subsequent development. The initial code plan may be utilized to rapidly iterate on the code, refining and extending it to meet specific requirements and edge cases. The generated code, organized into a well-defined folder structure, ensures maintainability, and facilitates collaboration among users. This approach significantly accelerates the development process and reduces the time to deploy.

The code generation, according to the implementations of present disclosure, may be a structured and interactive process involving requirement gathering, project structuring, planning, coding, and continuous user feedback to develop a comprehensive application. The utilization of agentic workflows composed syntax graphs and UI linting techniques results in a well-structured, holistic codebase with both frontend and backend components carefully organized and fully aligned with the initial requirements. Thus, the present disclosure may deliver high-quality, coherent & holistic code through an integrated and orchestrated approach with an ability to handle multiple requirement formats.

Additionally, the present disclosure employ discloses novel methodology to generate code for corresponding design prototype. By leveraging the tree layout structure 604, a hierarchical representation of the GUI 210 elements, the back-end system 106 may ensures accurate HTML structure generation, reflecting the precise layout and relationships between elements. Further, by providing the LLM 610 with a well-structured prompt, detailing the desired visual effects, the back-end system 106 may generate high-quality CSS code, closely aligning with the original design intent. Thus, the HTML and CSS code generation may enhance the accuracy, robustness, and visual appeal of the generated front-end code, optimizing the overall development process.

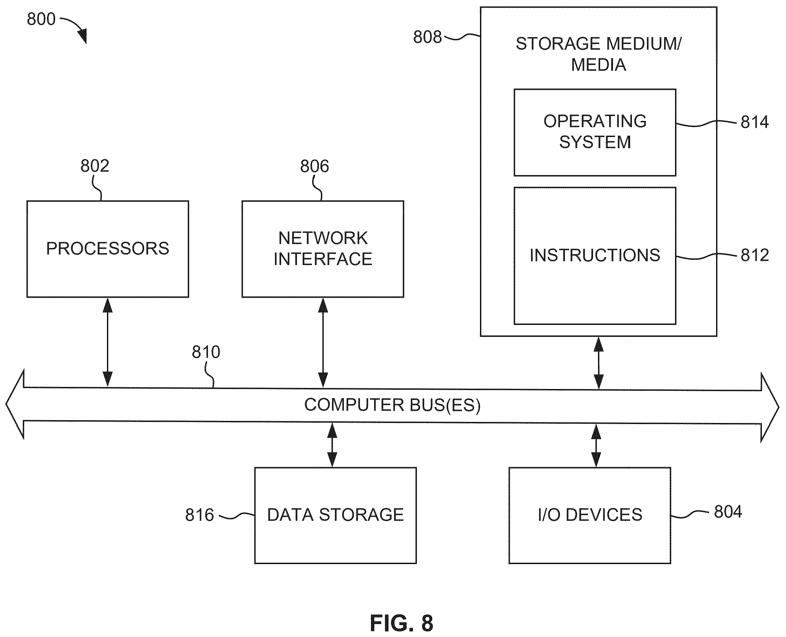

FIG. 8 illustrates a computer system 800 that may be used to implement the back-end system 106 for generating one or more artifacts in the software development lifecycle, in accordance with implementations of the present disclosure. More particularly, computing machines such as desktops, laptops, smartphones, tablets, and wearables which may be used to implement the tasks that may have the structure of the back-end system 106. The computer system 800 may include additional components not shown and that some of the process components described may be removed and/or modified. In another example, a computer system 800 may be deployed on external-cloud platforms such as cloud, internal corporate cloud computing clusters, organizational computing resources, and/or the like.

The computer system 800 includes processor(s) 802, such as a central processing unit, ASIC or another type of processing circuit, input/output devices 804, such as a display, mouse keyboard, etc., a network interface 806, such as a Local Area Network (LAN), a wireless 802.11x LAN, a 3G or 4G mobile WAN or a WiMax WAN, and a computer-readable medium 808. Each of these components may be operatively coupled to a bus 810. The computer-readable medium 808 may be any suitable medium that participates in providing instructions to the processor(s) 802 for execution. For example, the computer-readable medium 808 may be non-transitory or non-volatile medium, such as a magnetic disk or solid-state non-volatile memory or volatile medium such as RAM. The instructions or modules stored on the computer-readable medium 808 may include machine-readable instructions 812 executed by the processor(s) 802 that cause the processor(s) 802 to perform the methods and functions of the system for generating the artifacts in the software development lifecycle.

The system may be implemented as software stored on a non-transitory processor-readable medium and executed by the processors 802. For example, the computer-readable medium 808 may store an operating system 814, such as MAC OS, MS WINDOWS, UNIX, or LINUX, and code for the system. The operating system 814 may be multi-user, multiprocessing, multitasking, multithreading, real-time, and the like. For example, during runtime, the operating system 814 is running and the code for the system is executed by the processor(s) 802.

The computer system 800 may include a data storage 816, which may include non-volatile data storage. The data storage 816 stores any data used or generated by the system.

The network interface 806 connects the computer system 800 to internal systems for example, via a LAN. Also, the network interface 806 may connect the computer system 800 to the Internet. For example, the computer system 800 may connect to web browsers and other external applications and systems via the network interface 806.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer can include a processor for performing instructions and one or more memory devices for storing instructions and data. Generally, a computer will also include or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touchpad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
receiving, by at least one computing device through a graphical user interface (GUI), a first set of inputs corresponding to a configurable feature of a plurality of configurable features;
generating, by one or more processors of the at least one computing device based upon the first set of inputs, a prompt for the configurable feature;
generating, by the one or more processors, using a large language model and based upon the prompt, a story for the configurable feature;
receiving, by the at least one computing device through the GUI, a second set of inputs for generating an architecture of a plurality of architectures, wherein the story of the feature describes specifications of the configurable feature, and wherein the architecture corresponds with an environment in which the configurable feature is executed;
loading, by the one or more processors, a plurality of templates, each template of the plurality of templates associated with generating a low-level design specification for one or more components or modules of the architecture;
generating, by the one or more processors, based upon the loaded plurality of templates, the low-level design specification for the one or more components or modules of the architecture;
generating, by the one or more processors, based upon the story for the configurable feature, the architecture, and the low-level design specification for the one or more components or modules, a machine-executable code for the one or more components or modules of the architecture; and
transmitting, by the one or more processors, the machine-executable code to an integrated development environment (IDE).

2. The computer-implemented method of claim 1, wherein the plurality of configurable features comprises one or more functional features and/or one or more non-functional features, wherein a functional feature describes how a configurable feature works and a non-functional feature describes a user experience associated with the configurable feature.

3. The computer-implemented method of claim 1 or 2, further comprising receiving, by the at least one computing device through the GUI, feedback to the story, and updating the story based upon the feedback.

4. The computer-implemented method of any one of claims 1 to 3, wherein generating, by the one or more processors, the code further comprises generating the code using retrieval-augmented generation (RAG); and/or
wherein the plurality of configurable features comprises a user registration feature, a product catalog feature, a shopping cart feature, a payment gateway feature, an order management feature, a security feature, a performance feature, a scalability feature, an accessibility feature, and/ or a user interface feature; and/or
wherein the plurality of architectures comprises a functional architecture, an application architecture, and/or a technical architecture.

5. The computer-implemented method of any one of claims 1 to 4, wherein the second set of inputs for generating, by the one or more processors, the architecture of the plurality of architectures includes a hosting model, a cloud provider, and/or an architecture pattern; and/or
wherein generating, by the one or more processors, the machine-executable code further comprises generating the machine-executable code using a screen user interface mockup.

6. The computer-implemented method of any one of claims 1 to 5, further comprising generating, by the one or more processors, a set of test cases for the story for the configurable feature.

7. The computer-implemented method of any one of claims 1 to 6, wherein generating, by the one or more processors, the story for the configurable feature further comprises generating a plurality of prompts and linking each prompt of the plurality of prompts to generate the story for the configurable feature using the large language model.

8. A system comprising:
at least one memory configured to store machine executable instructions; and
at least one processor communicatively coupled with the at least one memory and configured to execute the machine executable instructions to perform operations comprising:
receiving, through a graphical user interface (GUI), a first set of inputs corresponding to a configurable feature of a plurality of configurable features;
generating, based upon the first set of inputs, a prompt for the configurable feature;
generating, using a large language model and based upon the prompt, a story for the configurable feature;
receiving, through the GUI, a second set of inputs for generating an architecture of a plurality of architectures, wherein the story of the configurable feature describes specifications of the configurable feature, and wherein the architecture corresponds with an environment in which the configurable feature is executed;
loading a plurality of templates, each template of the plurality of templates associated with generating a low-level design specification for one or more components or modules of the architecture;
generating, based upon the loaded plurality of templates, the low-level design specification for the one or more components or modules of the architecture;
generating, based upon the story for the configurable feature, the architecture, and the low-level design specification for the one or more components or modules, a machine-executable code for the one or more components or modules of the architecture; and
transmitting the machine-executable code to an integrated development environment (IDE).

9. The system of claim 8, wherein the plurality of configurable features comprises one or more functional features and/or one or more nonfunctional features, wherein a functional feature describes how the configurable feature works and a nonfunctional feature describes a user experience associated with the configurable feature.

10. The system of claim 8 or 9, wherein the operations further comprise receiving, through the GUI, feedback to the story, and updating the story based upon the feedback.

11. The system of any one of claims 8 to 10, wherein generating the code further comprises generating the code using retrieval-augmented generation (RAG); and/or
wherein the plurality of configurable features comprises a user registration feature, a product catalog feature, a shopping cart feature, a payment gateway feature, an order management feature, a security feature, a performance feature, a scalability feature, an accessibility feature, and/ or a user interface feature.

12. The system of any one of claims 8 to 11, wherein the plurality of architectures includes a functional architecture, an application architecture, and/or a technical architecture, and wherein generating the machine-executable code further comprises generating the machine-executable code using a screen user interface mockup.

13. The system of any one of claims 8 to 12, wherein the second set of inputs for generating the architecture of the plurality of architectures includes a hosting model, a cloud provider, and/or an architecture pattern; and/or
wherein the operations further comprise generating a set of test cases for the story for the configurable feature.

14. The system of any one of claims 8 to 13, wherein generating the story for the configurable feature further comprises generating a plurality of prompts and linking each prompt of the plurality of prompts to generate the story for the configurable feature using the large language model.

15. A non-transitory computer readable media storing machine executable instructions stored thereon, which, when executed by at least one processor of a computing device cause the at least one processor to perform operations comprising:
receiving, through a graphical user interface (GUI), a first set of inputs corresponding to a configurable feature of a plurality of configurable features;
generating, based upon the first set of inputs, a prompt for the configurable feature;
generating, using a large language model and based upon the prompt, a story for the configurable feature;
receiving, through the GUI, a second set of inputs for generating an architecture of a plurality of architectures, wherein the story of the configurable feature describes specifications of the configurable feature, and wherein the architecture corresponds with an environment in which the configurable feature is executed;
loading a plurality of templates, each template of the plurality of templates associated with generating a low-level design specification for one or more components or modules of the architecture;
generating, based upon the loaded plurality of templates, the low-level design specification for the one or more components or modules of the architecture;
generating, based upon: the story for the configurable feature, the architecture, and the low-level design specification for the one or more components or modules, a machine-executable code for the one or more components or modules of the architecture; and
transmitting the machine-executable code to an integrated development environment (IDE).
